# EUROPEAN PATENT SPECIFICATION

(11) **EP 1 847 910 B1**
(45) Date of publication and mention of the grant of the patent: **26.08.2009**
(21) Application number: 07105757.4
(22) Date of filing: 05.04.2007
(51) Int. Cl.: G06F 1/18

(54) **Host unit case with foldable lateral wall for a computer**
Hosteinheitengehäuse mit klappbarer Seitenwand für einen Computer
Boîtier pour unité hôte doté de paroi latérale pliable pour ordinateur

(30) Priority: 19.04.2006 CN 200610074837
(43) Date of publication of application: 24.10.2007
(73) Proprietor: AOPEN INC., Hsichih 221 Taipei Hsien (TW)
(72) Inventor: Cheng, Sheng-Hsiung, Taipei Hsien 221 (TW); Lin, Te-An, Taipei Hsien 221 (TW); Wang, Wu-Nan, Taipei Hsien 221 (TW); Huang, Chia-Chia, Taipei Hsien 221 (TW)
(74) Representative: Viering, Jentschura & Partner

(56) References cited:
- DE-U1- 29 714 861
- FR-A- 2 788 876
- JP-A- 2005 045 056
- US-A1- 2002 118 151
- US-A1- 2003 038 567
- US-B1- 6 354 681

## Description

### BACKGROUND OF THE INVENTION

1.Field of the Invention:

The present invention is related to a host unit case of a personal computer and particularly to a built-up type host unit case of a computer.

### 2. Brief description of related art:

US 6,354, 681 discloses a computer casing comprising a lateral opening covered by a moveable door plate consisting of two pieces, hinged together, which detach from the opening on three sides to reveal the inside of the computer case. DE 297 14 861 U1 discloses a foldable housing for *inter alia* a computer, which housing is provided in one piece and can be folded into correct relative orientation. JP 2005 045056 A discloses a cabinet rack with a frame divided on both sides through a short hinge within the frame allowing opposite side edges of the frame to fold inwards. This allows folding of the cabinet rack to a compact size.

The host unit case is employed to receive electronic devices such as a main board, hard disks, optical disk drives, floppy disk drives and power supply device. Usually, the host unit case is set up with an unchangeable structure. The composite type host unit case has prior art such as US 6,961,236 and Taiwan Utility model publication No. M258544. US 6,961,236 discloses a computer chassis and Taiwan Utility model publication No. M258544 discloses a host unit case to meet specifications of ATX and BTX.

Following prior art which is belonged to a further type for the host unit case is made available for being disassembled into several parts before being set up as the host unit case. Taiwan Patent Publication No. 468811 discloses a host unit case for an industrial computer. Taiwan Patent Publication No. 474423 discloses a computer chassis free from aid of hand tools. Taiwan Patent Publication No. 490120 discloses a composite type computer chassis. Taiwan Patent Publication No. 531142 discloses a composite type computer chassis assembly.

Further, the computer chassis free from aid of hand tools disclosed in Taiwan Patent Publication No. 474423 provides the front and rear cover plates, which are pivotally joined to a bottom plate with head pins, two frame plates for a big floppy disk drive, which are pivotally joined to the front and rear cover plates, and a cover plate for a small floppy disk drive is assembled to a frame plate and is fixedly hung to the bottom of frame plate for the big floppy disk drive. Further, four L shaped plates are fixed at four corners of the bottom plate to be joined to the two cover plates firmly. Finally, two lateral cover plates are hooked to the lateral sides of the preceding structure and fastened with set screws after the main board and the power supply frame being mounted to the preceding structure to complete the whole assembly of the computer chassis. The parts of the computer chassis are packaged separately such that less space is required for storage.

However, parts of the preceding prior art are so many and divided into several part groups and it is inconvenient to pick right parts during setting up the computer chassis such that it is hard to gather the parts before assembling and it takes a lot of time set up the computer chassis.

### SUMMARY OF THE INVENTION

The primary object is to provide a host unit case with foldable lateral wall for a computer with which the host unit case can be completely set up easily and quickly to enhance fun while the host unit case being set up by the user.

Another object is to provide a host unit case with foldable lateral wall for a computer with which the parts can be gathered together and reduced in a small volume while packaging for reducing delivery cost and saving storage space.

Accordingly, a host unit case with foldable lateral wall for a computer according to the present invention is capable of being reduced volume thereof while packaging and being completely set up conveniently and quickly and comprises:
a lateral wall, being composed of a first plate member and a second plate member and the plate members pivotally connecting with each other;
an upper cover;
a lower cover;
a front wall, having a first lateral edge to pivotally connect with the front end of the first plate member;
a rear wall, having a first lateral edge to pivotally connect with the rear end of the second plate member;
whereby, the preceding parts are capable of being extended to allow the front wall and the rear wall being joined to the upper and lower covers to allow the host unit case being completely set up conveniently and quickly for the host unit case being reduced the volume thereof while packaging.

### BRIEF DESCRIPTION OF THE DRAWINGS

The present invention can be more fully understood by reference to the following description and accompanying drawings, in which:
Fig. 1 is a perspective view of the first embodiment of a host unit case with foldable lateral wall for a computer according to the present invention;
Fig. 2 is a perspective view of the first embodiment of the host unit case shown in Fig. 1 illustrating the upper cover being detached;
Fig. 3 is a perspective view illustrating the lower cover of the host unit case of the invention being moved to the take-up position;
Fig. 4 is a perspective view illustrating the first and second support members being moved to the take-up position;
Fig. 5 is a perspective view illustrating the front and rear walls being moved to be close to each other;
Figs. 6A, 6B and 6C side elevational views illustrating steps to unfold the host unit case of the first embodiment for separating the front, rear and lateral walls apart ;
Fig. 7 is a perspective view of the second embodiment of the host unit case according to the present invention; and
Figs. 8A, 8B, 8C and 8D are plan views illustrating steps for folding another embodiment of the first support member.

### DETAILED DESCRIPTION OF THE INVENTION

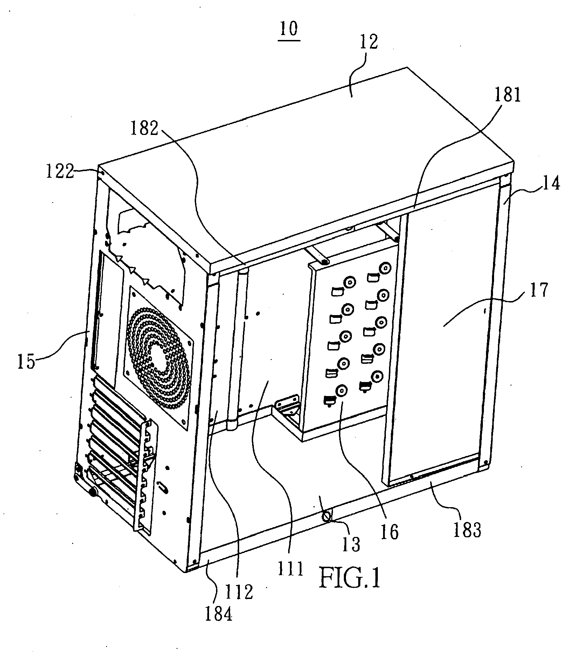

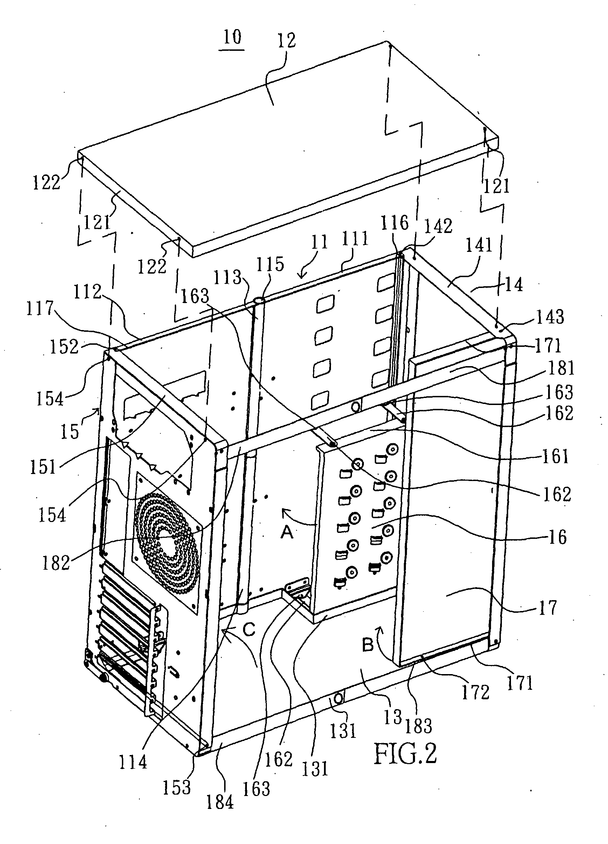

Referring to Figs. 1 and 2, the first embodiment of a host unit case with foldable lateral wall according to the present invention is capable of being reduced volume thereof for packaging and being completely set up conveniently and quickly . The host unit case 10 includes a lateral wall 11, an upper cover 12, a lower cover 13, a front wall 14 and a rear wall 15. The lateral wall 11 is composed of a first plate member 111 and a second plate member 112, which pivotally connect with each other in a way of a fitting part 113, 114 being alternately disposed at the joining sides of the first plate member 111 and second plate member 112 and a pivot rod 115 passing through pivotal holes of the fitting parts 113, 114. Alternatively, a conventional pivotal device such as a hinge can be employed to have two pivotal parts thereof being joined to the first plate member 111 and the second plate member 112 respectively. The first and second plate members 111, 112 each provide a margin frame 116, 117 bending inward respectively. The upper cover 12 has a margin frame 121 extending downward with the margin frame 121 having fixing holes 122 at the sides of the front and rear ends of the upper cover 12.The lower cover 13 has a margin frame 131 extending upward. The front wall 14 has a margin frame 141 extending rearward. The margin frame 141 at the upper and lower ends of the first lateral edge of the front wall 14 presses the upper and lower ends of the margin frame 116. The margin frames 141, 116 have pivotal holes corresponding to each other such that the front end of the first plate member 111 and the first lateral edge of the front wall 14 pivotally connect with each other with pivotal shafts 142 passing through the corresponding pivotal holes. The rear wall 15 has a margin frame 151 extending forward. The margin frame 151 at the upper and lower ends of the first lateral edge of the rear wall 15 presses the upper and lower ends of the margin frame 117. The margin frames 151, 117 have pivotal holes corresponding to each other such that the second plate member 112 and the first lateral edge of the rear wall 15 pivotally connect with each other with pivotal shafts 152 passing through the corresponding pivotal holes. The margin frame 151 at the lower end of the rear wall 15 presses the margin frame 131 of the lower cover 13 and the margin frames 151, 131 have pivotal holes corresponding to each other such that the lower cover 13 and the rear wall 15 pivotally connect with each other with pivotal shafts 153 passing through the corresponding pivotal holes. The front wall 14 and the rear wall 15 have fixing holes 154 corresponding to fixing holes 122 at the upper cover 12 such that the front wall 14 and the rear wall 15 are joined to the upper cover 12 with screws passing through the corresponding holes 122, 154.

The first embodiment further includes a first support member 16 and a second support member 17. The first support member 16 has a horizontal bent shaped plate element 161 at the top and bottom thereof and the front and rear ends of the two horizontal bent shaped plate element 161 are pivotally connected with an end of a connecting rod 162 respectively. The respective connecting rod 162 pivotally connects with a lug 163 at another end thereof and the lug 163 is joined to the first plate member 111. The margin frame 131 of the lower cover 13 presses the first support member 16 to fix the lower end of the first support member 16. The second support member 17 has a horizontal bent shaped plate element 171 at the top and bottom thereof. The margin frame 141 of the front wall 14 at the upper and lower ends of the second lateral edge thereof presses the plate elements 171. The margin frame 141 and the plate elements 171 provide fixing holes corresponding to each other such that the second support member 17 pivotally connects with the front wall 14 with pivotal shafts 143 passing through the pivotal holes. The plate element 171 at the bottom of the second support member 17 and the lower cover 13 have fixing holes 172 corresponding to each other such that the bottom of the second support member 17 can be joined to the lower cover 13 with screws passing through the corresponding fixing holes 172. The space between the first plate member 111 and the second support member 17 is larger enough to accommodate a first electronic device such as 5.25" floppy disk drive. The space between the first support member 16 and the second support member 17 is smaller enough to accommodate the second electronic device such as 3.25" floppy drive. The preceding pivotal structure between the first support member 16 and the first plate member 111 applies principle of four-connecting-rod linkage facilitates the first support member 16 to move along arrow A shown in Fig. 2 for being foldable to approach the first plate member 111. The four connecting rods 162 are capable of being arranged with either equal lengths or unequal lengths.

The first embodiment of present invention further includes a first long plate element 181, a second long plate element 182, a third long plate element 183 and a fourth long plate element 184. The front and rear ends of the first long plate element 181 pivotally connect with the upper end of the front wall 14 and the second long plate member 182. The rear end of the second long plate element 182 pivotally connects with the upper end of the rear wall 15. The front and rear ends of the third long plate element 183 pivotally connect with the lower end of the front wall 14 and the fourth long plate element 184. The rear end of the fourth long plate element 184 is pivotally connected to the lower end of the rear wall 15. The front wall 14 and the upper and lower ends of the second lateral edge at rear wall 15 are joined to the first, second, third and fourth long plate elements 181, 182, 183, 184 respectively to strengthen the unfolded host unit case 10.

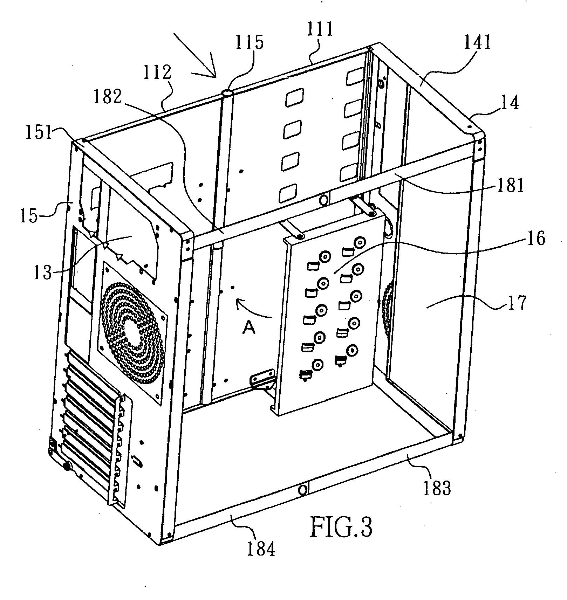

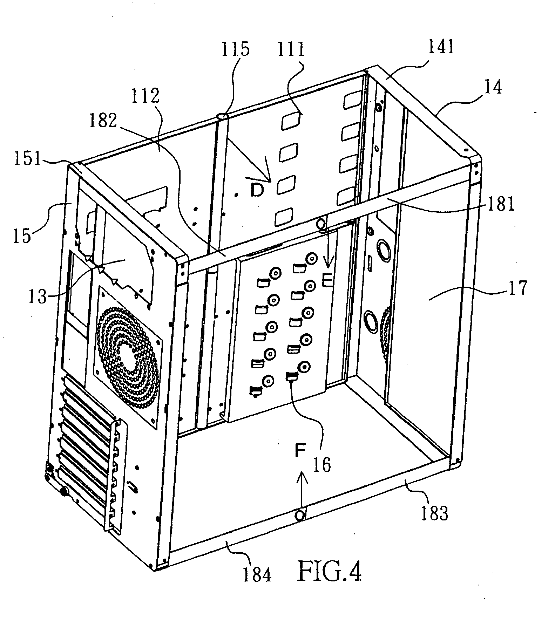

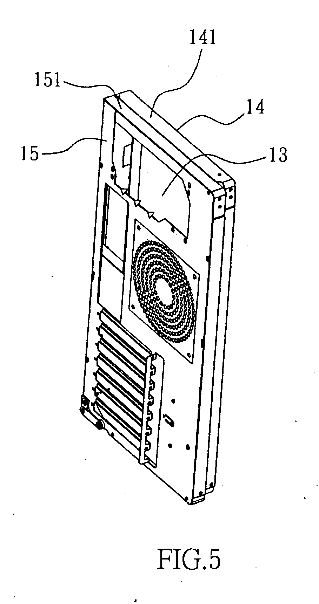

Referring to Figs. 2, 3, 4 and 5, when the host unit case 10 of the first embodiment is folded, the upper cover 12 is detached from the front wall 14 and rear wall 15 first. Next, the second support member 17 is moved along arrow B shown in Fig. 2 to press the front wall 14. Then, the lower cover 13 close to an end of the front wall 14 is moved along arrow C shown in Fig. 2 to press the rear wall 15 as shown in Fig. 3. Further, the first support member 16 is moved along arrow A shown in Fig. 3 to press the first plate member 111 as shown in Fig. 4. Further, the pivotally joining parts between the first plate member 111 and the second plate member 112 are moved along arrow D shown in Fig. 4 and the pivotally joining parts between first and second long 181, 182 plate elements are moved and along arrow E shown in Fig. 5. In this way, the pivotally joining parts between third and fourth long 183, 184 plate elements are moved along arrow F shown in Fig. 4 to allow the first plate member 111 and the first and third long plate elements 181, 183 press the front wall 14 and allow the second plate member 112 and the second and fourth long plate elements 182, 184 press the rear wall 15 respectively. In this way, the margin frames 141, 151 of the front and rear walls 14, 15 press to each other as shown in Fig. 5 to form a folded state such that a great deal of space occupied by the host unit case 10 is reduced significantly.

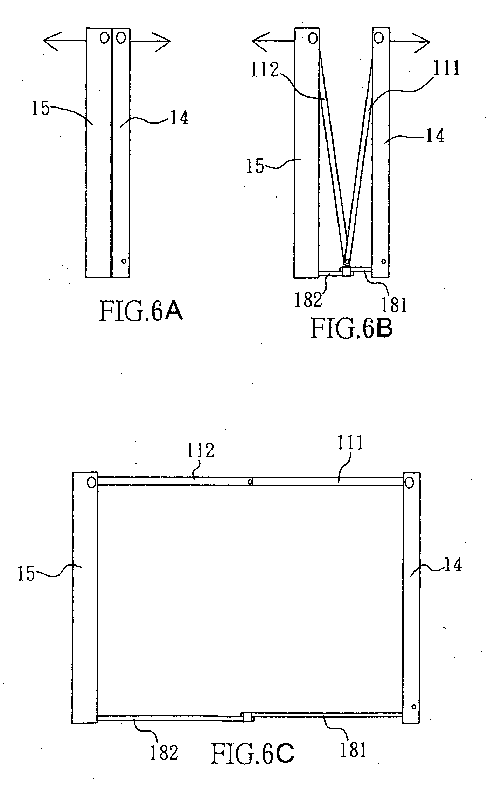

Referring to Figs. 2, 6A, 6B and 6C, when the host unit case of the present embodiment is unfolded, the front wall 14 and the rear wall 15 are moved forward and rearward first to move the pivotal parts between the first and second long plate elements 181, 182 upward and the pivotal parts between the third and fourth long plate elements 183, 184 downward as shown in Fig. 6A to extend the pivotal parts gradually as shown in Fig. 6B till being fully unfolded as shown in Fig. 6C. Referring to Fig. 2, the second support member 17 is lifted after the first support member 16 and the lower cover 13 being lifted and the first and the second support members 16, 17 are joined to the lower cover 13. In this way, the upper cover 12 is capable of being joined to the front wall 14 and the rear wall 15 to form a complete host unit case 10 conveniently and quickly.

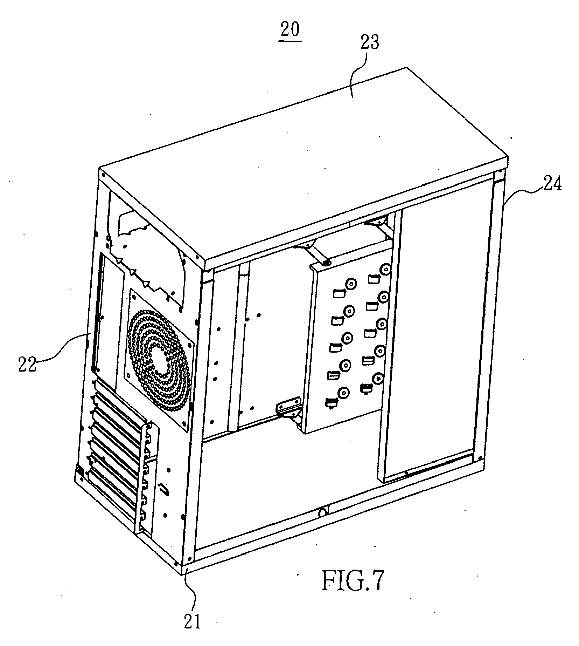

Referring to Fig. 7, the second embodiment of the host unit case with foldable lateral wall for a computer according to the present invention is illustrated. The host unit case 20 of the present embodiment is almost the same as the first embodiment and the only difference of the present embodiment from the previous embodiment is in that the lower cover 21, the front wall 24 and the rear wall 22 have fixing holes corresponding to each other such that the front wall 24 and the rear wall 22 are joined to the lower cover 21 respectively with screws passing through the corresponding fixing holes instead of the lower cover 21 pivotally connecting with the rear wall 22.

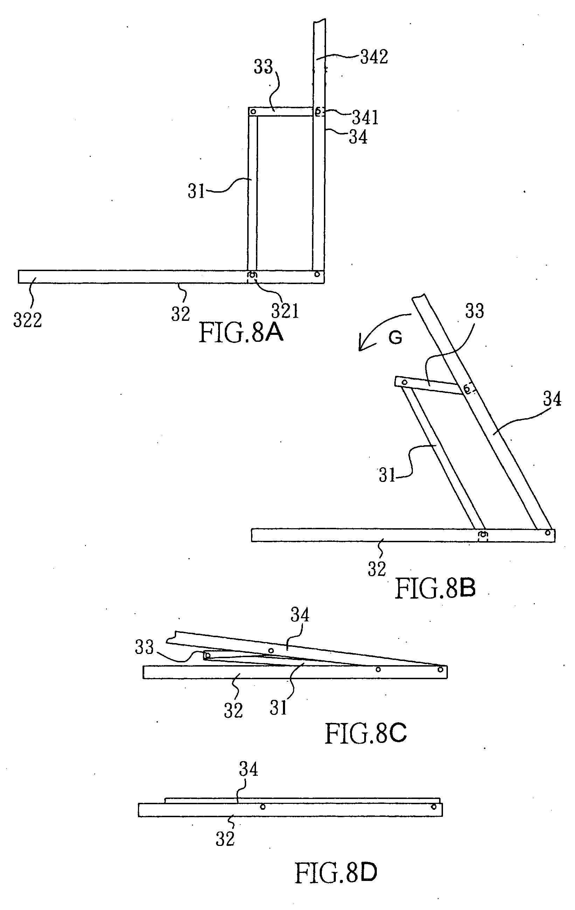

Referring to Figs. 8A, 8B, 8C and 8D, another embodiment of the first support member 31 is illustrated. The front end of the first support member 31 pivotally connects with the lug 321 at the front wall 32 and the rear end of the first support member 31 is pivotally connected to the connecting rod 33. Another end of the connecting rod 33 is pivotally joined to the lug 341 of the first plate element 34 on the lateral wall. The margin frame 322 of the front wall 32 is pivotally connected to the margin frame 342 of the first plate member 34 of the lateral wall as shown in Fig. 8A. The first support member 31 is movable with the front wall 32 and the first plate member 34 of the lateral wall such that the first plate member 34 of the lateral wall moves along arrow G shown in Fig. 8B to be close to the front wall 32 to allow the first support member 31 approaching between the front wall 32 and the first plate member 34 of the lateral wall. Steps of folding shown in Figs. 8B, 8C and 8D facilitate the first support member. 31 to be operated conveniently.

It is appreciated that the host unit case with foldable lateral wall for a computer according to the present invention is capable of being set up a complete host unit cas.e easily and quickly to enhance fun with self setting up the host unit case and be favorable for decreasing delivery cost and saving available storage space.

## Claims

1. A host unit case (10) with foldable lateral wall (11) for a computer, the host unit case capable of being reduced in volume for packaging and of being completely set up, and comprising:
A foldable lateral wall (11), being composed of a first plate member (111) and a second plate member (112), said first and second plate members pivotally connecting with each other;
an upper cover (12);
a lower cover (13);
a front wall (14);
a rear wall (15);
**characterized in that:**
the front wall (14) comprises a first lateral edge pivotally connected with the front end of the first plate member (111);
the rear wall (15) comprises a lateral edge pivotally connected with the rear end of the second plate member (112);
whereby, the foldable lateral wall (11) is capable of being extended upon set up to allow the front wall (14) and the rear wall (15) to be joined to the upper (12) and lower (13) covers such that the host unit case (10) is set up completely.

2. The host unit case with foldable lateral wall for a computer as defined in claim 1, wherein the first plate member and the second plate member each have a bent shaped first margin frame (116, 117) extending inward respectively; the front wall has a second margin frame (141) extending rearward; and the second margin frame at the upper and lower ends of said first lateral edge of the front wall, and the first margin frame (116) at the front end of the first plate member have pivotal holes corresponding to each other such that the front end of the first plate member and the front wall pivotally connect with each other with pivotal shafts passing through the corresponding pivotal holes.

3. The host unit case with foldable lateral wall for a computer as defined in claim 2, wherein the rear wall has a third margin frame (151) extending forward and the third margin frame at the upper and lower ends of said lateral edge of the rear wall, and the first margin frame (117) at the upper and lower end of the rear end of the second plate member have pivotal holes corresponding to each other such that the rear end of the second plate member pivotally connects with the rear wall with pivotal shafts passing through the pivotal holes.

4. The host unit case with foldable lateral wall for a computer as defined in claim 3 further comprising a first long plate element (181) and a second long plate element (182) with the front and rear ends of the first long plate element pivotally connecting with the upper end of the front wall and the front end of the second long plate element respectively; and the rear end of the second long plate element pivotally connecting with the upper end of the rear wall.

5. The host unit case with foldable lateral wall for a computer as defined in claim 4 further comprising a third long plate element (183) and a fourth long plate element (184) with the front and rear ends of the third long plate element pivotally connecting with the lower end of the front wall and the front end of the fourth long plate element respectively; and the rear end of the fourth plate member pivotally connecting with the lower end of the rear wall.

6. The host unit case with foldable lateral wall for a computer as defined in claim 3, wherein the lower cover has a fourth margin frame (131) extending upward; the third margin frame (151) at the lower end of the rear wall and the fourth margin frame have pivotal holes corresponding to each other such that the lower cover pivotally connects with the rear wall with pivotal shafts passing through the pivotal holes.

7. The host unit case with foldable lateral wall for a computer as defined in claim 4, wherein the lower cover has a fourth margin frame (131) extending upward; the third margin frame (151) at the lower end of the rear wall and the fourth margin frame have pivotal holes corresponding to each other such that the lower cover pivotally connects with the rear wall with pivotal shafts passing through the pivotal holes.

8. The host unit case with foldable lateral wall for a computer as defined in claim 3, wherein the front wall and the rear wall provide fixing holes corresponding to fixing holes at the lower cover such that the front wall and the rear wall are joined to the lower cover with screws passing through the corresponding fixing holes.

9. The host unit case with foldable lateral wall for a computer as defined in claim 4, wherein the front wall and the rear wall provide fixing holes corresponding to fixing holes at the lower cover such that the front wall and the rear wall are joined to the lower cover with screws passing through the corresponding fixing holes.

10. The host unit case with foldable lateral wall for a computer as defined in claim 3, wherein the front wall and the rear wall provide fixing holes (154) corresponding to fixing holes (122) at the upper cover such that the front wall and the rear wall are joined to the upper cover with screws passing through the corresponding fixing holes.

11. The host unit case with foldable lateral wall for a computer as defined in claim 4, wherein the front wall and the rear wall provide fixing holes (154) corresponding to fixing holes (122) at the upper cover such that the front wall and the rear wall are joined to the upper cover with screws passing through the corresponding fixing holes.

12. The host unit case with foldable lateral wall for a computer as defined in one of claims 1 to 11, wherein the first plate member further pivotally connects with a first support member (16).

13. The host unit case with foldable lateral wall for a computer as defined in claim 12, wherein the upper and lower ends of the first support member (16) have a horizontally bent shaped plate body (161) respectively with the front and rear end of the respective plate body being pivotally connected to an end of a connecting rod (162) and another end of the connecting rod pivotally joined to a lug (163) for being joined to the first plate member.

14. The host unit case with foldable lateral wall for a computer as defined in claim 13 when dependent on claim 6 or claim 7, wherein the fourth margin frame at the lower cover presses the lower end of the first support member.

15. The host unit case with foldable lateral wall for a computer as defined in claim 12, wherein a second lateral edge provided at the front wall pivotally connects with a second support member (17) such that a first electronic device is joined between the first plate member and the second support member and a second electronic device is joined between the first and second support members.

16. The host unit case with foldable lateral wall for a computer as defined in claim 15, wherein the top and bottom of the second support member provide a horizontally bent shaped plate body (161, 171) respectively; the upper and lower ends of the front wall and the respective plate body have pivotal holes corresponding to each that such that the second support member pivotally connects with the front wall with pivotal shafts passing through the corresponding pivotal holes.

17. " The host unit case with foldable lateral wall for a computer as defined in claim 15, wherein a fifth margin frame at the bottom of the second support member (17) and the lower cover (13) have fixing holes corresponding to each other such that the bottom of the second support member is joined to the lower cover with screws passing through the corresponding fixing holes.

18. The host unit case with foldable lateral wall for a computer as defined in any of claims 1 to 11 further comprising a first support member (31); wherein the front end of the first support member pivotally connects with a lug (321) and the lug is joined to the front wall; the rear end of the first support member pivotally connects with a connecting rod (33); another end of the connecting rod pivotally connects with another lug (341), which is joined to the first plate member of the lateral wall such that the first plate member is capable of being moved to be close to the front wall with the first support member being moved to be close to the front wall.

19. The host unit case with foldable lateral wall for a computer as defined in claim 18, wherein a second lateral edge provided at the front wall pivotally connects with a second support member such that a first electronic device is joined between the first plate member and the second support member and a second electronic device is joined between the first and second support members.

20. The host unit case with foldable lateral wall for a computer as defined in claim 19, wherein the top and bottom of the second support member provide a horizontally bent shaped plate body respectively; the upper and lower ends of the front wall and the respective plate body have pivotal holes corresponding to each that such that the second support member pivotally connects with the front wall with pivotal shafts passing through the corresponding pivotal holes.

## Patentansprüche

1. Host-Einheit-Gehäuse (10) mit klappbarer Seitenwand (11) für einen Rechner, wobei das Host-Einheit-Gehäuse dazu geeignet ist, zum Verpacken in seinem Volumen verringert zu werden und vollständig aufgebaut zu werden, und aufweisend:
eine klappbare Seitenwand (11), die aus einem ersten Plattenelement (111) und einem zweiten Plattenelement (112) gebildet ist, wobei das erste und das zweite Plattenelement gelenkig miteinander verbunden sind,
eine obere Abdeckung (12),
eine untere Abdeckung (13),
eine vordere Wand (14),
eine hintere Wand (15),
**dadurch gekennzeichnet, dass:**
die vordere Wand (14) einen ersten Seitenrand aufweist, der gelenkig mit dem vorderen Ende des ersten Plattenelements (111) verbunden ist,
die hintere Wand (15) einen Seitenrand aufweist, der gelenkig mit dem hinteren Ende des zweiten Plattenelements (112) verbunden ist,
wobei die klappbare Seitenwand (11) geeignet ist, beim Aufbauen ausgebreitet zu werden, um zu ermöglichen, dass die vordere Wand (14) und die hintere Wand (15) mit der oberen (12) und der unteren (13) Abdeckung derart verbunden werden, dass das Host-Einheit-Gehäuse (10) vollständig aufgebaut ist.

2. Host-Einheit-Gehäuse mit klappbarer Seitenwand für einen Rechner gemäß Anspruch 1, wobei das erste Plattenelement und das zweite Plattenelement jeweils einen abgewinkelt geformten ersten Randrahmen (116, 117) aufweisen, der sich jeweils nach innen erstreckt, die vordere Wand einen zweiten Randrahmen (141) aufweist, der sich nach hinten erstreckt, und der zweite Randrahmen an dem oberen und dem unteren Ende des ersten Seitenrandes der vorderen Wand und der erste Randrahmen (116) an dem vorderen Ende des ersten Plattenelements Gelenköffnungen aufweisen, die einander zugeordnet sind, so dass das vordere Ende des ersten Plattenelements und die vordere Wand mit Gelenkbolzen gelenkig miteinander verbunden sind, die durch die jeweiligen Gelenköffnungen hindurch passieren.

3. Host-Einheit-Gehäuse mit klappbarer Seitenwand für einen Rechner gemäß Anspruch 2, wobei die hintere Wand einen dritten Randrahmen (151) aufweist, der sich nach vorne erstreckt, und der dritte Randrahmen an dem oberen und dem unteren Ende des Seitenrandes der hinteren Wand sowie der erste Randrahmen (117) an dem oberen und dem unteren Ende des hinteren Endes des zweiten Plattenelements Gelenköffnungen aufweisen, die einander zugeordnet sind, so dass das hintere Ende des zweiten Plattenelements mit Gelenkbolzen gelenkig mit der hinteren Wand verbunden ist, die durch die Gelenköffnungen hindurch passieren.

4. Host-Einheit-Gehäuse mit klappbarer Seitenwand für einen Rechner gemäß Anspruch 3, ferner ein erstes langes Plattenelement (181) und ein zweites langes Plattenelement (182) aufweisend, wobei das vordere und das hintere Ende des ersten langen Plattenelements gelenkig mit dem oberen Ende der vorderen Wand beziehungsweise dem vorderen Ende des zweiten langen Plattenelements verbunden sind, und das hintere Ende des zweiten langen Plattenelements gelenkig mit dem oberen Ende der hinteren Wand verbunden ist.

5. Host-Einheit-Gehäuse mit klappbarer Seitenwand für einen Rechner gemäß Anspruch 4, ferner ein drittes langes Plattenelement (183) und ein viertes langes Plattenelement (184) aufweisend, wobei das vordere und das hintere Ende des dritten langen Plattenelements gelenkig mit dem unteren Ende der vorderen Wand beziehungsweise dem vorderen Ende des vierten langen Plattenelements verbunden sind, und das hintere Ende des vierten Plattenelements gelenkig mit dem unteren Ende der hinteren Wand verbunden ist.

6. Host-Einheit-Gehäuse mit klappbarer Seitenwand für einen Rechner gemäß Anspruch 3, wobei die untere Abdeckung einen vierten Randrahmen (131) aufweist, der sich nach oben erstreckt, der dritte Randrahmen (151) an dem unteren Ende der hinteren Wand und der vierte Randrahmen Gelenköffnungen aufweisen, die einander zugeordnet sind, so dass die untere Abdeckung mit Gelenkbolzen, die durch die Gelenköffnungen hindurch passieren, gelenkig mit der hinteren Wand verbunden ist.

7. Host-Einheit-Gehäuse mit klappbarer Seitenwand für einen Rechner gemäß Anspruch 4, wobei die untere Abdeckung einen vierten Randrahmen (131) aufweist, der sich nach oben erstreckt, und der dritte Randrahmen (151) an dem unteren Ende der hinteren Wand und der vierte Randrahmen Gelenköffnungen aufweisen, die einander zugeordnet sind, so dass die untere Abdeckung mit Gelenkbolzen, die durch die Gelenköffnungen hindurch passieren, gelenkig mit der hinteren Wand verbunden ist.

8. Host-Einheit-Gehäuse mit klappbarer Seitenwand für einen Rechner gemäß Anspruch 3, wobei die vordere Wand und die hintere Wand mit Befestigungslöchern versehen sind, die Befestigungslöchern an der unteren Abdeckung zugeordnet sind, so dass die vordere Wand und die hintere Wand mit Schrauben, die durch die entsprechenden Befestigungslöcher hindurch passieren, mit der unteren Abdeckung verbunden werden.

9. Host-Einheit-Gehäuse mit klappbarer Seitenwand für einen Rechner gemäß Anspruch 4, wobei die vordere Wand und die hintere Wand mit Befestigungslöchern versehen sind, die Befestigungslöchern an der unteren Abdeckung entsprechen, so dass die vordere Wand und die hintere Wand mit Schrauben, die durch die entsprechenden Befestigungslöcher hindurch passieren, mit der unteren Abdeckung verbunden werden.

10. Host-Einheit-Gehäuse mit klappbarer Seitenwand für einen Rechner gemäß Anspruch 3, wobei die vordere Wand und die hintere Wand mit Befestigungslöchern (154) versehen sind, die Befestigungslöchern (122) an der oberen Abdeckung zugeordnet sind, so dass die vordere Wand und die hintere Wand mit Schrauben, die durch die entsprechenden Befestigungslöcher hindurch passieren, mit der oberen Abdeckung verbunden werden.

11. Host-Einheit-Gehäuse mit klappbarer Seitenwand für einen Rechner gemäß Anspruch 4, wobei die vordere Wand und die hintere Wand mit Befestigungslöchern (154) versehen sind, die Befestigungslöchern (122) an der oberen Abdeckung entsprechen, so dass die vordere Wand und die hintere Wand mit Schrauben, die durch die entsprechenden Befestigungslöcher hindurch passieren, mit der oberen Abdeckung verbunden werden.

12. Host-Einheit-Gehäuse mit klappbarer Seitenwand für einen Rechner gemäß einem der Ansprüche 1 bis 11, wobei das erste Plattenelement ferner gelenkig mit einem ersten Stützelement (16) verbunden ist.

13. Host-Einheit-Gehäuse mit klappbarer Seitenwand für einen Rechner gemäß Anspruch 12, wobei das obere und das untere Ende des ersten Stützelements (16) einen horizontal abgewinkelt geformten Plattenkörper (161) aufweisen, wobei das vordere und das hintere Ende des jeweiligen Plattenkörpers jeweils gelenkig mit einem Ende einer Verbindungsstange (162) verbunden sind und ein anderes Ende der Verbindungsstange gelenkig mit einem Ansatz (163) verbunden ist, um mit dem ersten Plattenelement verbunden zu werden.

14. Host-Einheit-Gehäuse mit klappbarer Seitenwand für einen Rechner gemäß Anspruch 13, wenn dieser von Anspruch 6 oder 7 abhängt, wobei der vierte Randrahmen an der unteren Abdeckung auf das untere Ende des ersten Stützelements drückt.

15. Host-Einheit-Gehäuse mit klappbarer Seitenwand für einen Rechner gemäß Anspruch 12, wobei ein zweiter Seitenrand, der an der vorderen Wand vorgesehen ist, gelenkig mit einem zweiten Stützelement (17) verbunden ist, so dass eine erste elektronische Vorrichtung zwischen dem ersten Plattenelement und dem zweiten Stützelement angefügt wird und eine zweite elektronische Vorrichtung zwischen dem ersten und dem zweiten Stützelement angefügt wird.

16. Host-Einheit-Gehäuse mit klappbarer Seitenwand für einen Rechner gemäß Anspruch 15, wobei der obere und der untere Teil des zweiten Stützelements jeweils einen horizontal abgewinkelt geformten Plattenkörper (161, 171) bereitstellen, das obere und das untere Ende der vorderen Wand und der jeweilige Plattenkörper Gelenköffnungen aufweisen, die einander zugeordnet sind, so dass das zweite Stützelement mit Gelenkbolzen, die durch die jeweiligen Gelenköffnungen hindurch passieren, gelenkig mit der vorderen Wand verbunden ist.

17. Host-Einheit-Gehäuse mit klappbarer Seitenwand für einen Rechner gemäß Anspruch 15, wobei ein fünfter Randrahmen an dem Boden des zweiten Stützelements (17) und die untere Abdeckung (13) Befestigungslöcher aufweisen, die einander zugeordnet sind, so dass der Boden des zweiten Stützelements mit Schrauben, die durch die jeweiligen Befestigungslöcher passieren, mit der unteren Abdeckung verbunden wird.

18. Host-Einheit-Gehäuse mit klappbarer Seitenwand für einen Rechner gemäß einem der Ansprüche 1 bis 11, ferner ein erstes Stützelement (31) aufweisend, wobei das vordere Ende des ersten Stützelements gelenkig mit einem Ansatz (321) verbunden ist und der Ansatz an die vordere Wand angefügt ist, das hintere Ende des ersten Stützelements gelenkig mit einer Verbindungsstange (33) verbunden ist, ein anderes Ende der Verbindungsstange gelenkig mit einem anderen Ansatz (341) verbunden ist, der an das erste Plattenelement der Seitenwand angefügt ist, so dass das erste Plattenelement in die Nähe der vorderen Wand bewegt werden kann, wobei das erste Stützelement in die Nähe der vorderen Wand bewegt wird.

19. Host-Einheit-Gehäuse mit klappbarer Seitenwand für einen Rechner gemäß Anspruch 18, wobei ein zweiter Seitenrand, der an der vorderen Wand vorgesehen ist, gelenkig mit einem zweiten Stützelement verbunden ist, so dass eine erste elektronische Vorrichtung zwischen dem ersten Plattenelement und dem zweiten Stützelement angefügt wird und eine zweite elektronische Vorrichtung zwischen dem ersten und dem zweiten Stützelement angefügt wird.

20. Host-Einheit-Gehäuse mit klappbarer Seitenwand für einen Rechner gemäß Anspruch 19, wobei der obere und der untere Teil des zweiten Stützelements jeweils einen horizontal abgewinkelt geformten Plattenkörper vorsehen, das obere und das untere Ende der vorderen Wand und der jeweilige Plattenkörper Gelenköffnungen aufweisen, die einander entsprechen, so dass das zweite Stützelement mit Gelenkbolzen, die durch die jeweiligen Gelenköffnungen hindurch passieren, gelenkig mit der vorderen Wand verbunden ist.

## Revendications

1. Boîtier pour unité hôte (10) avec une paroi latérale pliable (11) pour un ordinateur, le boîtier pour unité hôte pouvant être réduit en volume pour l'emballage et être complètement installé, et comprenant :
une paroi latérale pliable (11) qui est composée d'un premier élément de plaque (111) et d'un second élément de plaque (112), lesdits premier et second éléments de plaque étant raccordés de manière pivotante l'un à l'autre ;
un couvercle supérieur (12) ;
un couvercle inférieur (13) ;
une paroi avant (14) ;
une paroi arrière (15) ;
**caractérisé en ce que :**
la paroi avant (14) comprend un premier bord latéral raccordé de manière pivotante avec l'extrémité avant du premier élément de plaque (111) ;
la paroi arrière (15) comprend un bord latéral raccordé de manière pivotante avec l'extrémité arrière du second élément de plaque (112) ;
moyennant quoi, la paroi latérale pliable (11) peut être étendue après installation pour permettre à la paroi avant (14) et à la paroi arrière (15) d'être assemblées aux couvercles supérieur (12) et inférieur (13) de sorte que le boîtier pour unité hôte (10) est complètement installé.

2. Boîtier pour unité hôte avec une paroi latérale pliable pour un ordinateur selon la revendication 1, dans lequel le premier élément de plaque et le second élément de plaque ont chacun un premier cadre de marge (116, 117) de forme courbée s'étendant respectivement vers l'intérieur ; la paroi avant a un second cadre de marge (141) s'étendant vers l'arrière ; et le second cadre de marge au niveau des extrémités supérieure et inférieure dudit premier bord latéral de la paroi avant, et le premier cadre de marge (116) au niveau de l'extrémité avant du premier élément de plaque ont des trous pivotants correspondant les uns aux autres de sorte que l'extrémité avant du premier élément de plaque et la paroi avant se raccordent de manière pivotante entre elles avec des axes pivotantes qui passent par les trous pivotants correspondants.

3. Boîtier pour unité hôte avec une paroi latérale pliable pour un ordinateur selon la revendication 2, dans lequel la paroi arrière a un troisième cadre de marge (151) s'étendant vers l'avant et le troisième cadre de marge au niveau des extrémités supérieure et inférieure dudit bord latéral de la paroi arrière, et le premier cadre de marge (117) au niveau de l'extrémité supérieure et inférieure de l'extrémité arrière du second élément de plaque ont des trous pivotants correspondant entre eux de sorte que l'extrémité arrière du second élément de plaque se raccorde de manière pivotante avec la paroi arrière avec des axes pivotants qui passent par les trous pivotants.

4. Boîtier pour unité hôte avec une paroi latérale pliable pour un ordinateur selon la revendication 3, comprenant en outre un premier élément de plaque long (181) et un second élément de plaque long (182) avec les extrémités avant et arrière du premier élément de plaque long qui se raccordent de manière pivotante avec l'extrémité supérieure de la paroi avant et l'extrémité avant du second élément de plaque long, respectivement ; et l'extrémité arrière du second élément de plaque long qui se raccorde de manière pivotante avec l'extrémité supérieure de la paroi arrière.

5. Boîtier pour unité hôte avec une paroi latérale pliable pour un ordinateur selon la revendication 4, comprenant en outre un troisième élément de plaque long (183) et un quatrième élément de plaque long (184) avec les extrémités avant et arrière du troisième élément de plaque long qui se raccordent de manière pivotante avec l'extrémité inférieure de la paroi avant et l'extrémité avant du quatrième élément de plaque long, respectivement ; et l'extrémité arrière du quatrième élément de plaque se raccordant de manière pivotante avec l'extrémité inférieure de la paroi arrière.

6. Boîtier pour unité hôte avec une paroi latérale pliable pour un ordinateur selon la revendication 3, dans lequel le couvercle inférieur a un quatrième cadre de marge (131) s'étendant vers le haut ; le troisième cadre de marge (151) au niveau de l'extrémité inférieure de la paroi arrière et le quatrième cadre de marge ont des trous pivotants correspondant entre eux de sorte que le couvercle inférieur se raccorde de manière pivotante avec la paroi arrière avec des axes pivotants qui passent par les trous pivotants.

7. Boîtier pour unité hôte avec une paroi latérale pliable pour un ordinateur selon la revendication 4, dans lequel le couvercle inférieur a un quatrième cadre de marge (131) s'étendant vers le haut ; le troisième cadre de marge (151) au niveau de l'extrémité inférieure de la paroi arrière et le quatrième cadre de marge ont des trous pivotants correspondant entre eux de sorte que le couvercle inférieur se raccorde de manière pivotante avec la paroi arrière avec les axes pivotants qui passent à travers les trous pivotants.

8. Boîtier pour unité hôte avec une paroi latérale pliable pour un ordinateur selon la revendication 3, dans lequel la paroi avant et la paroi arrière fournissent des trous de fixation correspondant aux trous de fixation situés au niveau du couvercle inférieur de sorte que la paroi avant et la paroi arrière sont assemblées sur le couvercle inférieur avec des vis qui passent à travers les trous de fixation correspondants.

9. Boîtier pour unité hôte avec une paroi latérale pliable pour un ordinateur selon la revendication 4, dans lequel la paroi avant et la paroi arrière fournissent des trous de fixation correspondant aux trous de fixation situés au niveau du couvercle inférieur de sorte que la paroi avant et la paroi arrière sont assemblées sur le couvercle inférieur avec des vis qui passent à travers les trous de fixation correspondants.

10. Boîtier pour unité hôte avec une paroi latérale pliable pour un ordinateur selon la revendication 3, dans lequel la paroi avant et la paroi arrière fournissent des trous de fixation (154) correspondant aux trous de fixation (122) situés au niveau du couvercle supérieur de sorte que la paroi avant et la paroi arrière sont assemblées sur le couvercle supérieur avec des vis qui passent à travers les trous de fixation correspondants.

11. Boîtier pour unité hôte avec une paroi latérale pliable pour un ordinateur selon la revendication 4, dans lequel la paroi avant et la paroi arrière fournissent des trous de fixation (154) correspondant aux trous de fixation (122) situés au niveau du couvercle supérieur de sorte que la paroi avant et la paroi arrière sont assemblées sur le couvercle supérieur avec des vis qui passent à travers les trous de fixation correspondants.

12. Boîtier pour unité hôte avec une paroi latérale pliable pour un ordinateur selon l'une quelconque des revendications 1 à 11, dans lequel le premier élément de plaque se raccorde en outre de manière pivotante avec un premier élément de support (16).

13. Boîtier pour unité hôte avec une paroi latérale pliable pour un ordinateur selon la revendication 12, dans lequel les extrémités supérieure et inférieure du premier élément de support (16) ont un corps de plaque (161) de forme horizontalement incurvée respectivement avec les extrémités avant et arrière du corps de plaque respectif qui sont raccordées de manière pivotante à une extrémité d'une tige de raccordement (162) et à une autre extrémité de la tige de raccordement assemblée de manière pivotante à une patte (163) pour être assemblée au premier élément de plaque.

14. Boîtier pour unité hôte avec une paroi latérale pliable pour un ordinateur selon la revendication 13, lorsqu'elle dépend de la revendication 6 ou de la revendication 7, dans lequel le quatrième cadre de marge au niveau du couvercle inférieur comprime l'extrémité inférieure du premier élément de support.

15. Boîtier pour unité hôte avec une paroi latérale pliable pour un ordinateur selon la revendication 12, dans lequel un second bord latéral prévu au niveau de la paroi avant se raccorde de manière pivotante avec un second élément de support (17) de sorte qu'un premier dispositif électronique est assemblé entre le premier élément de plaque et le second élément de support et un second dispositif électronique est assemblé entre les premier et second éléments de support.

16. Boîtier pour unité hôte avec une paroi latérale pliable pour un ordinateur selon la revendication 15, dans lequel la partie supérieure et la partie inférieure du second élément de support fournissent un corps de plaque (161, 171) de forme horizontalement incurvée respectivement; les extrémités supérieure et inférieure de la paroi avant et le corps de plaque respectif ont des trous pivotants correspondant entre eux de sorte que le second élément de support se raccorde de manière pivotante avec la paroi avant, avec les axes pivotants qui passent par les trous pivotants correspondants.

17. Boîtier pour unité hôte avec une paroi latérale pliable pour un ordinateur selon la revendication 15, dans lequel un cinquième cadre de marge au fond du second élément de support (17) et le couvercle inférieur (13) ont des trous de fixation correspondant entre eux de sorte que le fond du second élément de support est assemblé sur le couvercle inférieur avec des vis qui passent à travers les trous de fixation correspondants.

18. Boîtier pour unité hôte avec une paroi latérale pliable pour un ordinateur selon l'une quelconque des revendications 1 à 11, comprenant en outre un premier élément de support (31) dans lequel l'extrémité avant du premier élément de support se raccorde de manière pivotante avec une patte (321) et la patte est assemblée à la paroi avant ; l'extrémité arrière du premier élément de support se raccorde de manière pivotante avec une tige de raccordement (33) ; une autre extrémité de la tige de raccordement se raccorde de manière pivotante avec une autre patte (341) qui est assemblée sur le premier élément de plaque de la paroi latérale de sorte que le premier élément de plaque peut être déplacé pour se rapprocher de la paroi avant avec le premier élément de support qui est déplacé pour se rapprocher de la paroi avant.

19. Boîtier pour unité hôte avec une paroi latérale pliable pour un ordinateur selon la revendication 18, dans lequel un second bord latéral prévu au niveau de la paroi avant se raccorde de manière pivotante avec un second élément de support de sorte qu'un premier dispositif électronique est assemblé entre le premier élément de plaque et le second élément de support et un second dispositif électronique est assemblé entre les premier et second éléments de support.

20. Boîtier pour unité hôte avec une paroi latérale pliable pour un ordinateur selon la revendication 19, dans lequel la partie supérieure et la partie inférieure du second élément de support fournissent un corps de plaque de forme horizontalement incurvée respectivement ; les extrémités supérieure et inférieure de la paroi avant et le corps de plaque respectif ont des trous pivotants correspondant entre eux de sorte que le second élément de support se raccorde de manière pivotante avec la paroi avant avec les axes pivotants qui passent à travers les trous pivotants correspondants.
